# EUROPEAN PATENT SPECIFICATION

(11) **EP 0 846 881 B1**
(45) Date of publication and mention of the grant of the patent: **05.03.2003**
(21) Application number: 97309615.9
(22) Date of filing: 28.11.1997
(51) Int. Cl.: F16C 33/10

(54) **A bearing**
Lager
Palier

(30) Priority: 05.12.1996 KR 6205196
(43) Date of publication of application: 10.06.1998
(73) Proprietor: Samsung Electronics Co., Ltd., Suwon City, Kyungki-do (KR)
(72) Inventor: Lee, Chang-Woo, Suwon City, Kyungki-do (KR)
(74) Representative: Read, Matthew Charles

(56) References cited:
- EP-A- 0 456 456
- DE-A- 19 712 432
- US-A- 5 246 294
- US-A- 5 427 456
- US-A- 5 581 425

## Description

The present invention relates to a bearing in accordance with the preamble of claim 1, as known from US-A-5581425.

Hemispherical bearings are widely known and are used to support shafts that undergo rotative or rectilinear movement. A particular advantage with hemispherical bearings is that they can support load in both the radial and axial directions simultaneously and render the use of separate bearings for each of the radial and axial directions unnecessary. This results in an overall reduction in weight making them particularly suitable for use in, for example, internal motors used in electronic goods such as computer hard drives, laser beam scanners, laser beam printers and the like.

In a laser beam printer, for example, a photosensitive drum is radiated with laser beams to form a scanned image on its surface. A rotating multi-faceted mirror system reflects the beams towards the photosensitive drum at uniform velocity so that the scanned image formed on its surface is aligned with the axis of the photosensitive drum.

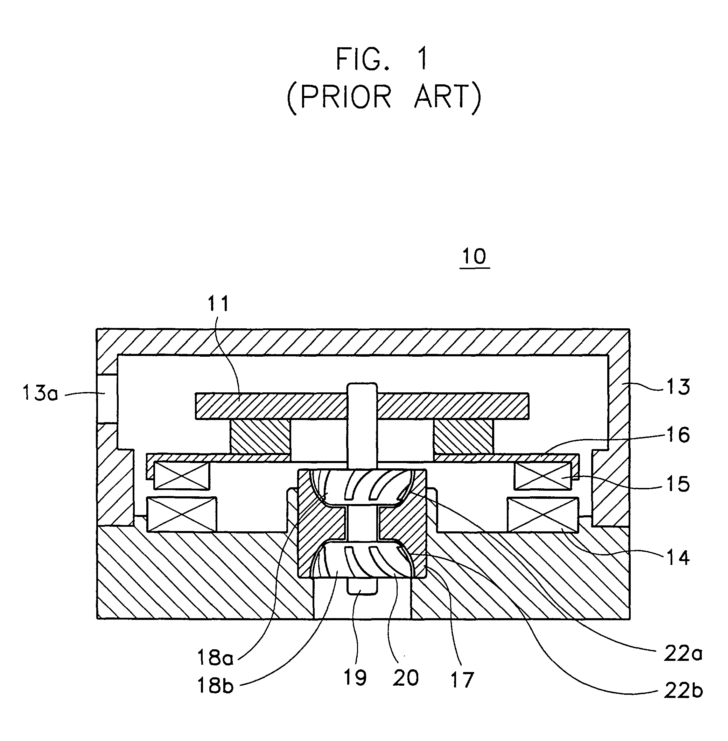

A sectional view of a conventional multi-faceted mirror system 10 in which a conventional motor is mounted is illustrated in Figure 1. The rotating multi-faceted mirror system 10 comprises a housing 13 having an aperture 13a through which a multi-faceted mirror 11 is exposed. A motor is disposed beneath the multi-faceted mirror 11 and comprises a stator 14 fixed to the housing 13 and a rotor 15 attached to a fixing member 16 on the multi-faceted mirror 11 so that the stator 14 and rotor 15 electromagnetically cooperate with each other.

A centre portion of the housing 13 supports a hemispherical bushing 17 having upper and lower hemispherical grooves 22a,22b and a pair of hemispherical bearings 18a and 18b are rotatably mounted within each of them.

The hemispherical bearings are coupled to a rotating shaft 19 which extends through the centres of the hemispherical bearings 18a,18b and the hemispherical bushing 17 so that the bearings 18a,18b rotate together with the shaft 19. When electric current is supplied to the motor 12, the rotor 15, the multi-faceted mirror 11 and the rotating shaft 19 rotate together. Spiral grooves 20 formed on the hemispherical bearings 18a,18b induce air into the bearing generating dynamic pressure and forming minute clearances between the hemispherical bearings 18a and 18b and the hemispherical grooves 22a and 22b.

A disadvantage with the conventional rotating multi-faceted mirror system described above is that an insufficient amount of dynamic pressure is generated for supporting the load applied in an axial direction by the rotor, the multi-faceted mirror, and the rotating shaft. Accordingly, contact between the bearings and the bushing occurs causing friction resulting in surface wear and increased current consumption.

It is an object of the invention to overcome or substantially alleviate the problem discussed above.

A bearing according to the present invention is characterised in that the plurality of slots are formed in the smaller flat surface of the hemispherical bearing element.

Preferably, the slots do not have open ends.

Preferably, the bearing includes a plurality of grooves configured to produce, on rotation of the shaft, a substantially radially acting cushion of air between the bearing element and the bushing.

The slots formed in the smaller flat surface of the bearing element conveniently comprise a ring of chevron shaped slots.

In a preferred embodiment, the shaft extends through the bushing.

In an alternative embodiment, two bearing elements are preferably located co-axially about the shaft and are configured for rotation therewith.

Preferably, the two bearing elements are arranged back to back about the shaft.

Preferably the shaft is oriented vertically.

Preferably the bearing is incorporated in a motor.

Embodiments of the invention will now be described, by way of example only, with reference to the accompanying drawings, in which:
Figure 1 is a sectional view of a rotating multi-faceted mirror system incorporating a motor having a conventional bearing;
Figure 2 is an exploded perspective view illustrating a laser printer incorporating a motor having a bearing according to a preferred embodiment of the present invention;
Figure 3 is a sectional view illustrating an assembly of hemispherical bearings and hemispherical bushing according to a preferred embodiment of the present invention; and
Figure 4 is a plan view illustrating a flat surface of a hemispherical bearing according to a preferred embodiment of the present invention.

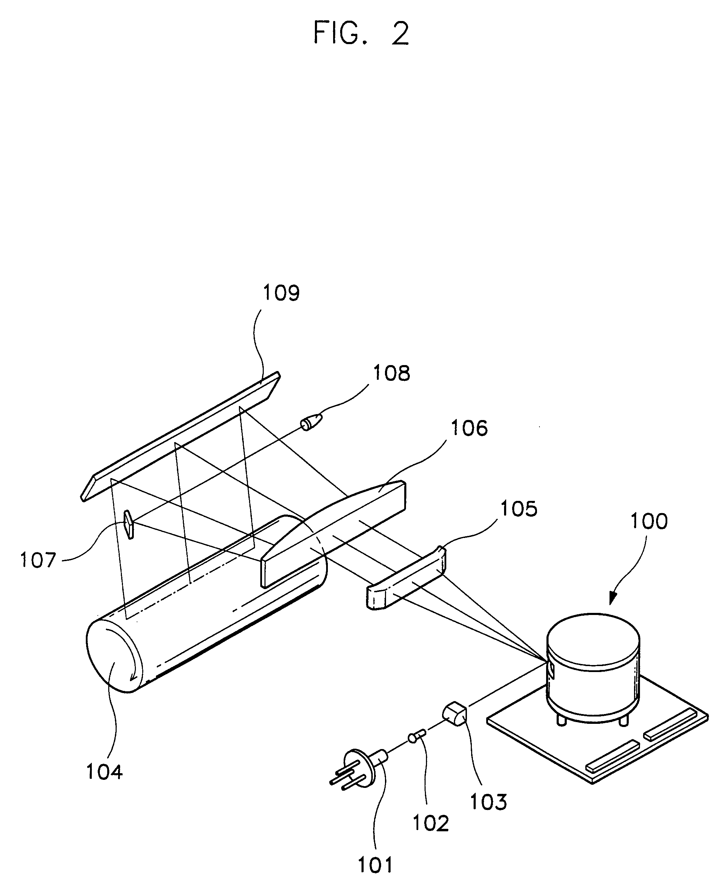

Referring to Figure 2, there is shown a schematic exploded perspective view of a conventional laser beam printer incorporating a motor having a bearing in accordance with an embodiment of the invention.

As shown in Figure 2, the laser beam printer comprises a semiconductor laser 101 and a collimate lens 102 for converting light from the semiconductor laser 101 into laser beams. The laser beam printer further comprises a rotating multi-faceted mirror system 100 for converting the laser beams into a fan beam, and a cylindrical lens 103 disposed between the multi-faceted mirror system 100 and the collimate lens 102.

A photosensitive drum 104 is provided for recording an image from the beams radiated via the multi-faceted mirror system 100. Disposed between the multi-faceted lens system 100 and the photosensitive drum 104, in order, is a spherical lens 105, a toric lens 106, a horizontal synchronising lens 107, a detecting sensor 108, and a reflector 109.

Beams are radiated toward the photosensitive drum 104 at a uniform velocity by the multi-faceted lens system 100 and pass through the spherical lens 105 before being focused on the photosensitive drum 104 onto which they are reflected by the reflector 109. The horizontal synchronising lens 107 and the detecting sensor 108 ensure that the beams are level so that they are reflected onto the photosensitive drum 104 parallel to its axis of rotation.

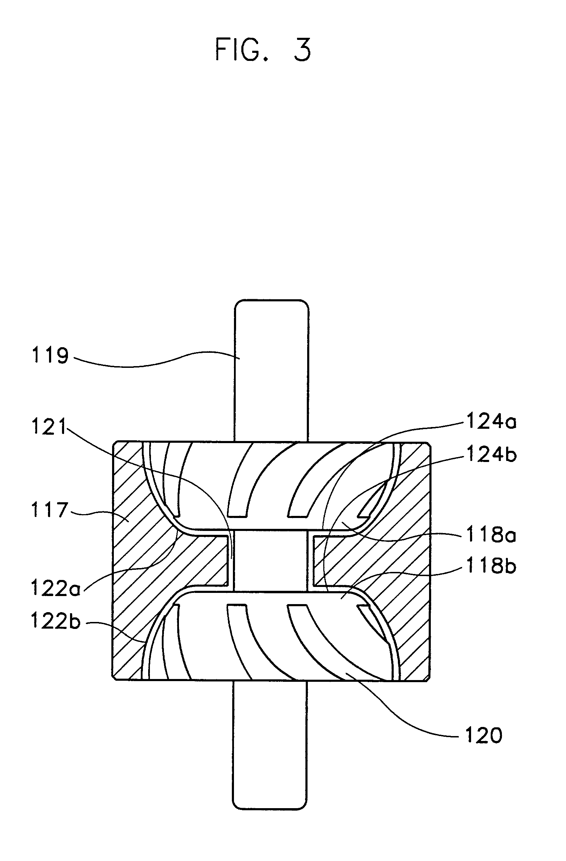

An assembly of the hemispherical bearings and bushing according to a preferred embodiment of the present invention will now be described with reference to Figure 3.

As shown in Figure 3, upper and lower hemispherical grooves 122a are formed in upper and lower sides of a hemispherical bushing 117 in which hemispherical bearings 118a and 118b are respectively inserted.

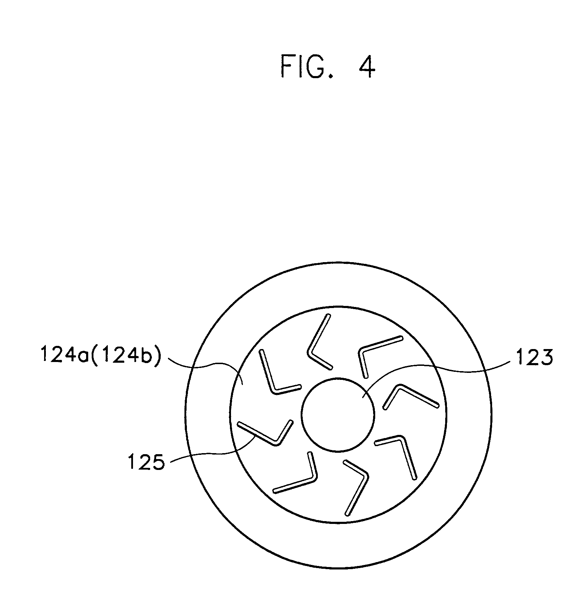

The upper and lower hemispherical grooves 122a,122b are in communication via a hole 121 and the hemispherical bearings 118a, 118b are disposed so that their flat surfaces 124a,124b are facing each other. A rotating shaft 119 is coupled to and passes through holes 123 in each hemispherical bearing 118a, 118b (see Figure 4). The shaft also extends through communicating hole 121 in the bushing 117. A plurality of spiral grooves 120 are formed on the surface of each of the upper and lower hemispherical bearings 118a and 118b such that air can be induced between the hemispherical bearings 118a and 118b and the hemispherical grooves 122a and 122b and act as a lubricant. The spiral grooves 120 are configured to generate dynamic pressure easily by inducing air around the rotating shaft 119 during rotation.

A plan view illustrating opposing flat surfaces 124a and 124b of the upper and lower hemispherical bearings 118a and 118b as illustrated in Figure 4.

As shown in Figure 4, a plurality of herringbone shaped grooves 125 are formed on the flat surfaces 124a and 124b of each of the upper and lower hemispherical bearings 118a and 118b so that air is introduced between each of the flat surfaces 124a and 124b and the hemispherical bushing 117, thereby enabling dynamic pressure between the bushing 117 and the bearings 118a,118b to be generated more easily.

When electric current is not being supplied to the multi-faceted mirror system 11 (see Figure 1), the upper hemispherical bearing 118a rests in contact with the upper hemispherical groove 122a while the lower hemispherical bearing 118b is maintained at a predetermined clearance with the lower hemispherical groove 122b.

When electric current is supplied to the multi-faceted mirror system to rotate the multi-faceted mirror 11 and the shaft 119, air is introduced between the hemispherical bearings 118 and the rotating bushing 117. The air generates dynamic pressure between the hemispherical bearings 118a and 118b and the hemispherical bushing 117, causing the hemispherical bearings 118 and the rotating shaft 119 to ascend and creates a minute clearance between the bushing 117 and the bearings 118. As a result, the multi-faceted mirror 11 rotates smoothly.

As dynamic pressure is formed between the flat surfaces 124a and 124b and the hemispherical bushing 117 as a result of introducing air into the bearing through the herringbone grooves 125, the supporting force against the axial load acting on the hemispherical bearings 118a and 118b and the hemispherical bushing 117 is increased.

While this invention has been described in connection with what is presently considered to be the most practical and preferred embodiment, it is to be understood that the invention is not limited to the disclosed embodiments, but, on the contrary, is intended to cover various modifications and equivalent arrangements included within the scope of the appended claims.

## Claims

1. A bearing comprising a rotatable shaft (119), a hemispherical bearing element (118a,118b) which is truncated to form a further, smaller flat surface (124a,124b) located coaxially about the shaft (119) and configured for rotation with the shaft (119) and having a plurality of slots (125) therein and configured so as to produce a rotation of the shaft, a substantially axially acting cushion of air between the bearing element (118a, 118b) and a bushing (117) receiving the bearing element (118a,118b) **characterised in that** the plurality of slots (125) are formed in the smaller flat surface (124a,124b) of the hemispherical bearing element (118a,118b).

2. A bearing according to claim 1 wherein the slots (125) do not have open ends.

3. An assembly according to claim 1 or 2 including a plurality of grooves (120) configured to produce, on rotation of the shaft (119), a substantially radially acting cushion of air between the bearing element (118a,118b) and the bushing (117).

4. A bearing according to any preceding claim wherein the slots (125) comprise a ring of chevron shaped slots.

5. A bearing according to any preceding claim wherein the shaft (119) extends through the bushing (117).

6. A bearing according to any preceding claim wherein two bearing elements (118a,118b) are located coaxially about the shaft (119) and are configured for rotation therewith.

7. A bearing according to claim 6 wherein the bearing elements (118a,118b) are located back to back about the shaft (119).

8. A bearing according to any preceding claim wherein the shaft (119) is oriented vertically.

9. A motor incorporating a bearing according to any preceding claim.

## Patentansprüche

1. Lager, umfassend eine drehbare Welle (119), ein Kugelpfannenlagerelement (118a, 118b), das zur Bildung einer weiteren, kleineren, flachen Oberfläche (124a, 124b) abgeschnitten ist, die koaxial um die Welle (119) positioniert und für eine Rotation mit der Welle (119) konfiguriert ist und eine Mehrzahl von Schlitzen (125) darin aufweist und so konfiguriert ist, dass bei Rotation der Welle ein im Wesentlichen axial wirkendes Luftkissen zwischen dem Lagerelement (118a, 118b) und einer das Lagerelement (118a, 118b) aufnehmenden Buchse (117) entsteht, **dadurch gekennzeichnet, dass** die Mehrzahl der Schlitze (125) in der kleineren flachen Oberfläche (124a, 124b) des Kugelpfannenlagerelementes (118a, 118b) ausgebildet ist.

2. Lager nach Anspruch 1, bei dem die Schlitze (125) keine offenen Enden haben.

3. Baugruppe nach Anspruch 1 oder 2 mit einer Mehrzahl von Nuten (120), die so konfiguriert sind, dass bei Rotation der Welle (119) ein im Wesentlichen radial wirkendes Luftkissen zwischen dem Lagerelement (118a, 118b) und der Buchse (117) entsteht.

4. Lager nach einem der vorherigen Ansprüche, bei dem die Schlitze (125) einen Ring von hakenförmigen Schlitzen umfassen.

5. Lager nach einem der vorherigen Ansprüche, bei dem die Welle (119) durch die Buchse (117) verläuft.

6. Lager nach einem der vorherigen Ansprüche, bei dem die beiden Lagerelemente (118a, 118b) koaxial um die Welle (119) angeordnet und zum Rotieren mit dieser konfiguriert sind.

7. Lager nach Anspruch 6, bei dem die Lagerelemente (118a, 118b) Rücken an Rücken um die Welle (119) positioniert sind.

8. Lager nach einem der vorherigen Ansprüche, bei dem die Welle (119) senkrecht ausgerichtet ist.

9. Motor mit einem Lager nach einem der vorherigen Ansprüche.

## Revendications

1. Un palier comprenant un arbre rotatif (119), un élément formant palier hémisphérique (118a,118b), qui est tronqué pour former une autre surface plate plus petite (124a,124b), placé coaxialement autour de l'arbre (119) et configuré pour tourner avec l'arbre (119) et ayant une pluralité de fentes (125) à l'intérieur et configuré de sorte à produire, lorsque l'arbre tourne, un coussin d'air qui agit sensiblement axialement entre l'élément formant palier (118a,118b) et une douille (117) qui reçoit l'élément formant palier (118a,118b), **caractérisé en ce que** la pluralité de fentes (125) sont formées dans la surface plane plus petite (124a,124b) de l'élément formant palier hémisphérique (118a,118b).

2. Un palier selon la revendication 1, dans lequel les fentes (125) n'ont pas des extrémités ouvertes.

3. Un ensemble selon la revendication 1 ou 2, qui inclut une pluralité de rainures (120) configurées pour produire, lorsque l'arbre (119) tourne, un coussin d'air qui agit sensiblement radialement entre l'élément formant palier (118a,118b) et la douille (117).

4. Un palier selon l'une quelconque des revendications précédentes, dans lequel les fentes (125) comprennent un anneau de fentes en forme de chevron.

5. Un palier selon l'une quelconque des revendications précédentes, dans lequel l'arbre (119) se prolonge à travers la douille (117).

6. Un palier selon l'une quelconque des revendications précédentes, dans lequel deux éléments formant paliers (118a,118b) sont placés coaxialement autour de l'arbre (119) et sont configurés pour tourner avec celui-ci.

7. Un palier selon la revendication 6, dans lequel les éléments formant paliers (118a,118b) sont placés dos à dos autour de l'arbre (119).

8. Un palier selon l'une quelconque des revendications précédentes, dans lequel l'arbre (119) est orienté verticalement.

9. Un moteur qui incorpore un palier selon l'une quelconque des revendications précédentes.
